# EUROPEAN PATENT SPECIFICATION

(11) **EP 1 302 376 B1**
(45) Date of publication and mention of the grant of the patent: **26.04.2006**
(21) Application number: 01124450.6
(22) Date of filing: 11.10.2001
(51) Int. Cl.: B60R 25/04

(54) **Method and apparatus for preventing unauthorized access to a vehicle ignition**
Verfahren und Vorrichtung zum Schutz gegen unerlaubtem Zugang zur Zündanlage eines Fahrzeuges
Méthode et dispositif empêchant l' accès non autorisé au dispositif d' allumage d' un véhicule

(43) Date of publication of application: 16.04.2003
(73) Proprietor: 2TIS Technologies Inc, Vancouver, BC V6G 1L6 (CA)
(72) Inventor: Ellingsworth, Carl, Salt Spring Island, BC V8K 2L4 (CA)
(74) Representative: Weber, Joachim

(56) References cited:
- EP-A- 0 904 996
- US-A- 3 634 724
- US-A- 3 675 036
- US-A- 4 213 436
- US-A- 5 524 597

## Description

### FIELD OF THE INVENTION

The present invention relates to an apparatus and method for preventing unauthorized access to a vehicle according to the preamble portion of claims 1, 5, 17 and 22, respectively.

### BACKGROUND OF THE INVENTION

Generally speaking, the theft of vehicles such as snowmobiles, ATVs, watercrafts, motorcycles and other vehicles having a magneto/stator present in the motor system is fairly straightforward, much, to the demise of the owners of such vehicles. This is also a problem for automobiles despite the fact that they do not include a magneto or stator.

The simplicity in, for example, starting the motors of these vehicles is realized by the arrangements used to link the ignition system to the ignition generator coil. In snowmobiles, for example, the block connectors electrically connect the ignition switch, kill switch and power accessories to the ignition switch. These elements are all exposed outwardly of the motor. To the skilled thief, since these elements are readily accessible, bypass is simple and can typically be achieved in seconds. The result is that the vehicle can be easily started and driven away with ease and with a minimum of effort.

In an attempt to speak to the escalation in theft of these vehicles, many devices have been proposed in the art which attempt to provide the user/owner with a greater degree of security. The arrangements known incorporate alarms, keylock systems, manual circuit interrupts *inter alia.* These devices, although somewhat useful, are all limited by the same vulnerability, namely the fact that they are external systems which are accessible by a thief and therefore are easily disabled by bypass or "hot wiring".

In the case of snowmobiles, track locks have been proposed. These devices are simply not pragmatic; the user is confined to carrying these bulky awkward items on the snowmobile which requires storage space. This space is often at a premium in view of the size of the snowmobile.

A current manufacturer has offered a digital security system which positions a CDI ignition circuit, microprocessor rev limiter, etc. in a small housing atop the engine. This system has a level of effectiveness, however, it is still vulnerable by its external application. The housing can simply be removed and replaced with a second unit carried by a thief.

Other systems for preventing theft of watercraft include markings on the craft itself or special indications on the hull identification plate. These attempts at preventing theft can be easily circumvented by simply removing and replacing the plates or altering the information thereon.

In terms of automobiles, steering wheel arrangements such as the Club™ are typically employed. These devices are somewhat useful, but are easily removeable by determined thieves.

Immobilizers are also used in automobiles for theft prevention, but are limited by their external disposition.

In view of the fact that the vehicles are expensive, a more sophisticated method and apparatus is required which is not external of the motor or engine and which does not employ interceptable digital streams.

The present invention addresses this need and thus one object of one embodiment of the present invention is internal and therefore offers a security system which is substantially inaccessible to tampering.

EP 0 904 996 A1 describes an ignition system according to the preamble of claim 1 comprising an ignition coil connected to a plug, and a capacitive-discharge ignition circuit connected to the coil and having a supply input connected to an output of the generator and a control input connected to another, third output of the generator which supplies a signal indicative of the rate of rotation of the engine. An electronic processing and control unit is connected to the control input of the ignition circuit and to a device for acquiring signals emitted by a transponder connected thereto. The control unit is arranged to permit control and operation of the ignition circuit in order to start the engine only if the signals received by the acquisition device contain a predetermined code.

### SUMMARY OF THE INVENTION

It is an object of the present invention to provide an improved apparatus and method for preventing unauthorized access to and ultimately the theft of a vehicle.

The solution of the object is achieved by a method for preventing
unauthorized access to a vehicle having a motor, a power source for the motor, a magneto and a stator housed within a housing and an ignition generator coil connected in electrical communication with the magneto, comprising the steps of:
providing an ignition generator coil interrupt circuit electrically connected to the ignition generator coil, the circuit for selectively interrupting electrical communication to the ignition generator;
mounting the ignition generator coil interrupt circuit directly within the housing;
providing switch means connected to the circuit for allowing electrical communication interruption to the ignition generator coil; and
activating the switch means to interrupt electrical communication to the ignition generator coil and disabling engine starting.

Generally speaking, the vehicles incorporating stator/magneto arrangements include watercraft, all terrain vehicles, snowmobiles, among others.

As a particular convenience, the switch means may be selected from any suitable switching devices, such as mechanical, electrical, electro-mechanical, electronic (digital) arrangements. The important feature is that the circuit (*supra*) is positioned within the housing as opposed to externally; this latter arrangement is what limited the effectiveness of the prior art.
The solution of the object is further achieved by providing an arrangement for preventing unauthorized access to a vehicle, comprising:
a vehicle, the vehicle having a power source, a magneto and a stator housed within a housing and an ignition generator coil in electrical communication with the magneto;
an ignition generator coil interrupt circuit electrically connected to the ignition generator coil, the circuit for selectively interrupting electrical communication to the ignition generator, the circuit positioned directly within the housing; and
switch means connected to the circuit for allowing electrical communication interruption to the ignition generator coil for disabling the motor.

Mounting location for the circuit is conveniently anywhere within the housing with a suitable connection to the ignition generator coil. As a useful position, the circuit may be positioned between the stator and magneto.

In the embodiment noted above, the assembly could be provided as a kit for retrofit applications and can easily be used for watercraft, snowmobiles, all terrain vehicles, *inter alia.*
The solution of the object is further achieved by the combination of features of claim 17 or 22.

The means for establishing electrical communication between the sensors and coils is known in the art as an ECM motherboard. In current arrangements the ECM motherboard in automobiles is externally mounted of the engine and thus is vulnerable to tampering. If removed and replaced with a similar component not equipped with a theft deterrent (immobilizer) auto theft is easily achieved.

By providing the switch arrangement and mounting location, the presence of an immoblized ECM motherboard is of no consequence; the arrangement discussed *supra* interrupts communication to or from the sensors leading to the ECM motherboard and further is mounted at least partially within the engine block to avoid tampering, bypass or expeditious removal.

As a particularly attractive advantage, the switch means may be integrally mounted to the sensor or a plurality of sensors. By providing several such switches, security for preventing unauthorized access may be augmented.

It will be readily apparent to those skilled that the vehicles having stator/magneto arrangements could easily be adopted to the circuit mentioned above where the stator/magneto is removed in future modifications of such vehicles.

To this end, the present invention can be easily applied to conventional automobile engines. As indicated previously, the concept of the invention is to position a circuit internally of the engine capable of interrupting elements essential for the engine to fire (trigger coil, camshaft position sensor, crank sensor, ignition coil, ignition generator coil, CDI module/ECM, fuel/air supply, *inter alia*)*.* The internal disposition thus avoids removal, tampering or otherwise circumvention of the system to significantly reduce the likelihood of theft.

Having thus described the invention, reference will now be made to the accompanying drawings illustrating preferred embodiments.

### BRIEF DESCRIPTION OF THE DRAWINGS

Figure 1 is a perspective view of a typical engine of the vehicles set forth herein;
Figure 2 is a view similar to Figure 1 with the cover removed from the stator housing;
Figure 3 is a schematic diagram of the wiring of a typical snowmobile;
Figure 4 is a view similar to Figure 2 with the arrangement according to one embodiment installed;
Figure 5 is an abbreviated schematic diagram illustrating the positioning of the elements according to one embodiment of the present invention;
Figure 6 is a schematic illustration of another embodiment of the present invention;
Figure 7 is a schematic illustration of another embodiment of the present invention;
Figure 8 is a schematic diagram of the ignition circuit for an automobile with the switch;
Figure 9 is a schematic illustration of a vehicle and positioning of various sensors;
Figure 10 is a schematic diagram of the switch arrangement in relation to the sensor(s) and ECM motherboard;
Figure 11 is a schematic illustration of a further embodiment of the present invention; and
Figure 12 is a schematic illustration of another further embodiment of the present invention.

### Similar numerals in the figures denote similar elements

### DETAILED DESCRIPTION OF THE PREFERRED EMBODIMENTS

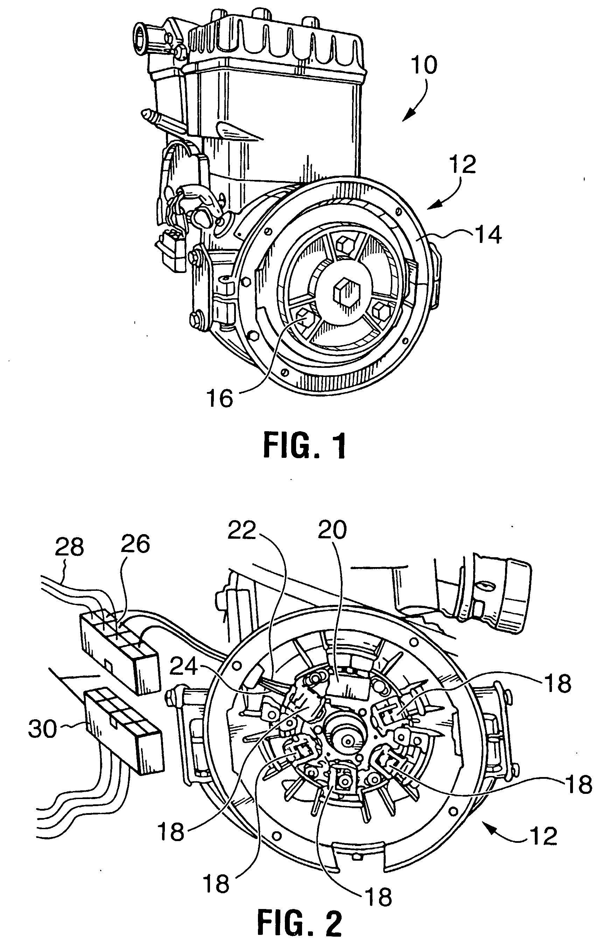

Referring now to the drawings and particularly Figure 1, numeral 10 generally references the engine. There is provided a housing 12 for housing the magneto and stator. A cover 14 is fixed by fasteners 16 to provide a sealed stator/magneto housing. As is generally known, specialized tools and skill are required to remove the cover 14 and eventually gain access to the interior of the housing 12.

Figure 2 illustrates the interior of the housing 12 where there are mounted several coils 18, shown in the example as a quantity of five. A main coil or ignition generator coil 20 is also provided and is integral in starting the engine. It is known that such coils generally operate on the principle of sensors. Coil 20 has two leads 22 and 24 which terminate at a block connector 26. Block connector 26 also includes leads, generally referenced by numeral 28, leading to the CDI box (not shown). A mating block connector 30 connects to block connector 26 and the former provides leads to the ignition switch, kill switch and power accessories (none of which is shown) of the vehicle (not shown).

The arrangement is generally well known in the art. Unfortunately, it is also well known that by simply disconnecting the block connectors 26 and 30, all security systems typically associated with the vehicle are disabled while a signal is still capable of being supplied to the CDI box from the ignition generator coil 20. Accordingly, the vehicle will start in this condition.

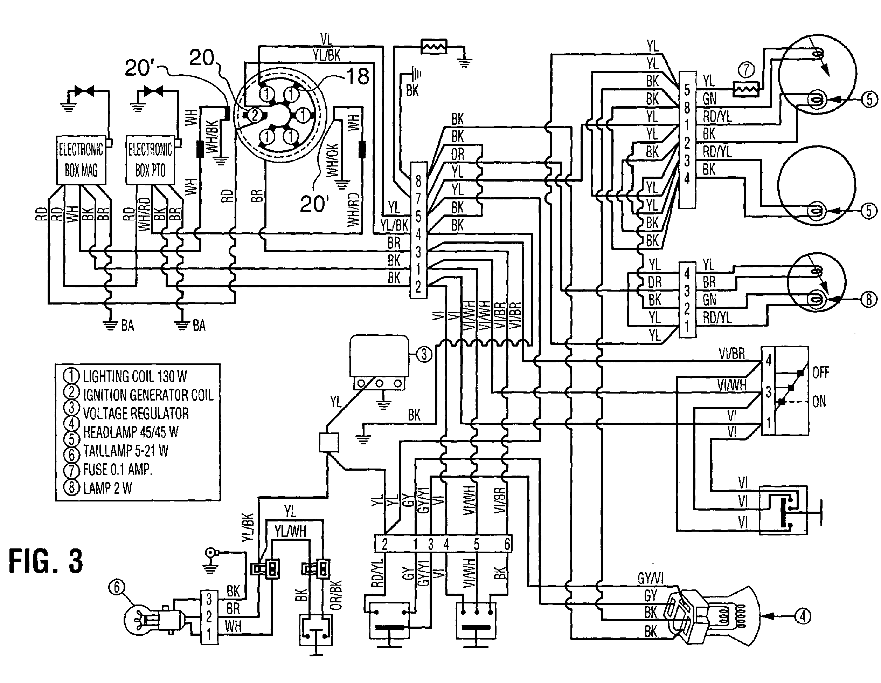

Figure 3 illustrates a typical schematic diagram for a conventional snowmobile, although the diagram is applicable to typical magneto/stator motors. As the diagram illustrates, the disposition of the ignition generator coil 20 in the circuit facilitates easy starting of the engine when the block connectors 26 and 30 are disconnected. Trigger coils are referenced by numeral 20'.

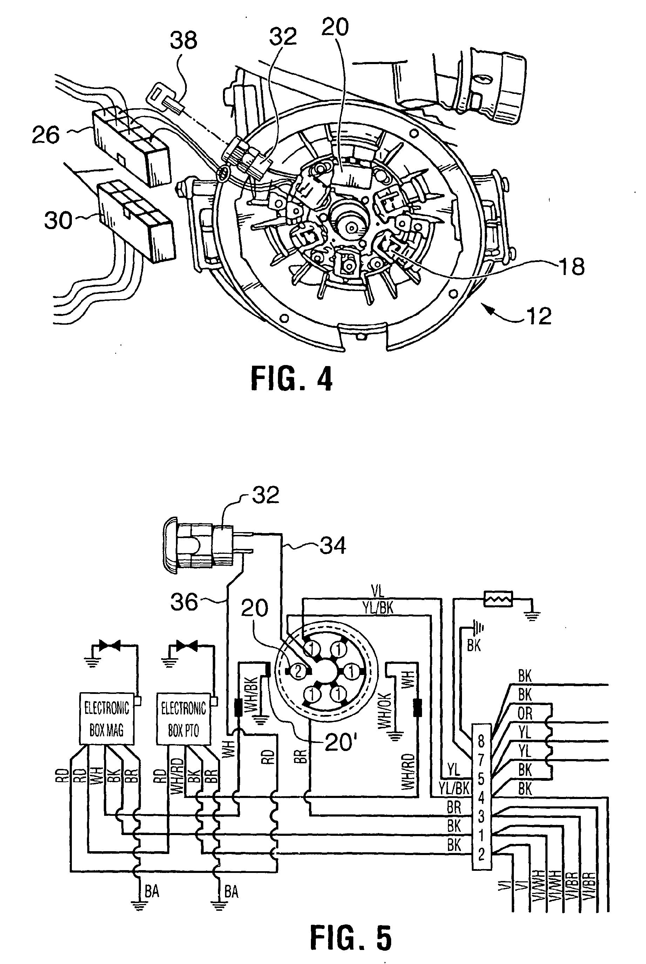

Figure 4 illustrates an example of the invention as positioned within the housing 12. A switch 32 is disposed in housing 12 and in this case is an electrical/mechanical switch. Figure 5 illustrates a truncated schematic of the circuit of Figure 4 showing the positioning of the switch 32 and its relationship to ignition generator coil 20. Trigger coils are referenced by numeral 20' As illustrated, the switch 32 includes leads 34 and 36, with lead 34 being connected to ignition generator coil 20 and lead 36 extending to other electrical connections related to starting the vehicle. By connection to ignition generator coil 20, the circuit is interrupted in the OFF position and is unaffected by disconnection of block connectors 26 and 30. Accordingly, the user, in order to start the vehicle must initially actuate the switch 32 into the ON position with, for example, a key 38 which, in turn, will re-enable the ignition generator coil 20. Once this is done, normal procedures may be performed to start the vehicle.

In the embodiment of Figure 4, a switch is mounted in the housing 12 adjacent the ignition generator coil 20. The positioning adjacent the ignition generator coil 20 is not essential. In the situation where the switch system comprises a remotely controllable arrangement, the switch may be replaced by a receiver (not shown) well known in the art. In these devices an antenna can be positioned in any convenient location provided it can communicate with a transmitter (not shown). It will be appreciated to those skilled in the art that any suitable switch capable of selectively interrupting the ignition generator coil circuit may be used.

Advantageously, by positioning the circuit interrupt portion of the switch within the housing, tampering or bypass is difficult, tedious and would more than likely damage the vehicle if a thief attempted any tampering. Further, if the switch mechanism is damaged, broken or removed, the vehicle cannot be made to start unless original wiring is restored. This is obviously time consuming and cannot be performed with any degree of stealth.

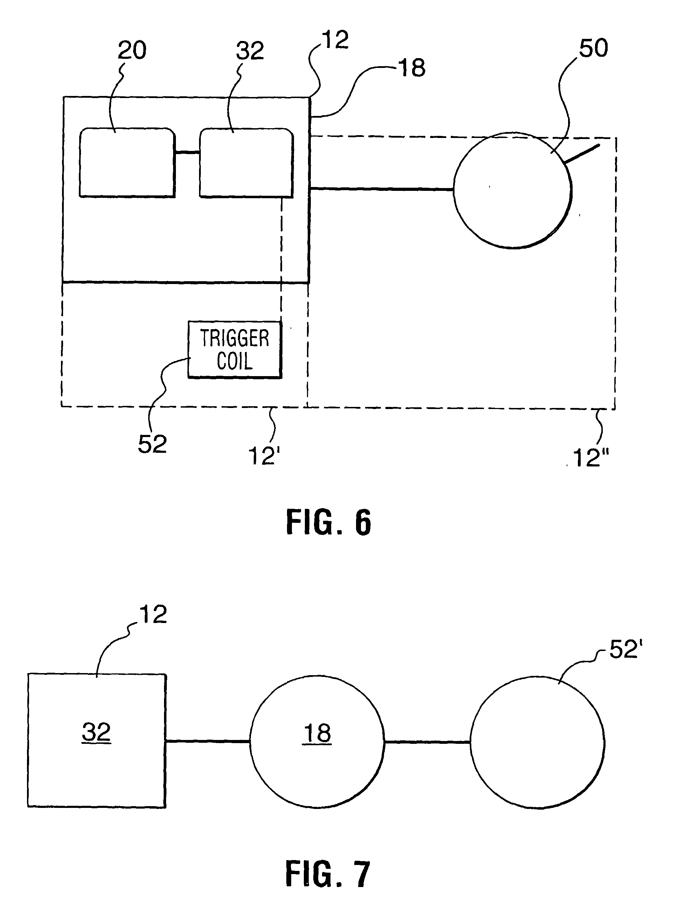

Figure 6 illustrates a further embodiment of the overall concept of the invention. In this embodiment, the engine housing 12 is shown the ignition generator coil 20 connected to the switch means 32 and the circuit positioned within housing 12. As illustrated, this circuit is electrically connected to a CDI box, referenced in this figure by number 18. The CDI module 18 is, in turn, electrically connected to the additional coils as well as a power supply (not shown) as is well known. As a further variation of Figure 6, the dashed line represented by numeral 12' constitutes the engine housing 12, but accommodates a trigger coil 52, which trigger coil 52 communicates electrically with switch means 32 and subsequently to CDI module 18. This is a variation where the trigger coil 52, switch means 32 and CDI module 18 are electrically connected for interruption. This provides an alternative to the ignition generator coil 20, switch means 32 and CDI module 18 combination.

As still a further variant, the engine housing represented by the extended chain line 12" may also include the CDI module 50 such that the CDI module 50, switch 32 and ignition generator coil 20 as well as trigger coil 52 are all positioned within the engine housing.

Figure 7 illustrates a further variation where the electrical communication between switch means 32 and ignition coils, referenced as 52', is interrupted by CDI 18.

The point in the further variations is to demonstrate the fact that the switch 32 is positioned within the housing and is in one manner or another connected to an essential element required for operation of the engine (not shown). By this provision, theft of the vehicle incorporating the variants outlined in Figure 6 is substantially averted, since no parts are available outside of the engine compartment for easy removal and or exchange in order to steal the vehicle.

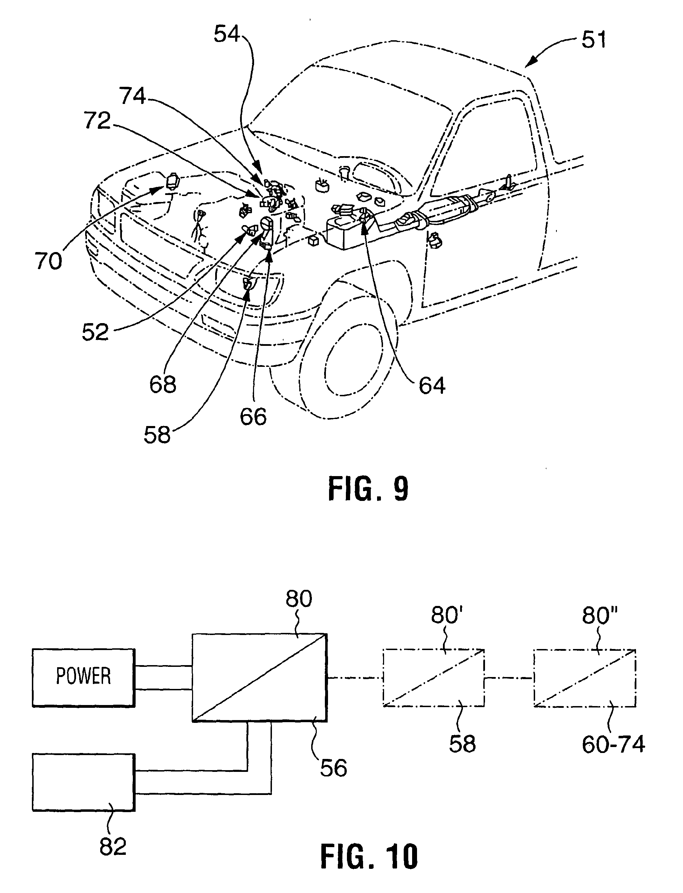

In Figure 9, a vehicle 51 is shown and includes an engine and an engine block, broadly denoted by numeral 54. As is known, a number of sensors are required to carry out various functions with respect to the operation of the vehicle. In the example, numeral 56 represents a camshaft position sensor, numeral 58 represents a crankshaft position sensor and numerals 56 through 74 represent other sensors, amplifiers, *inter alia.*

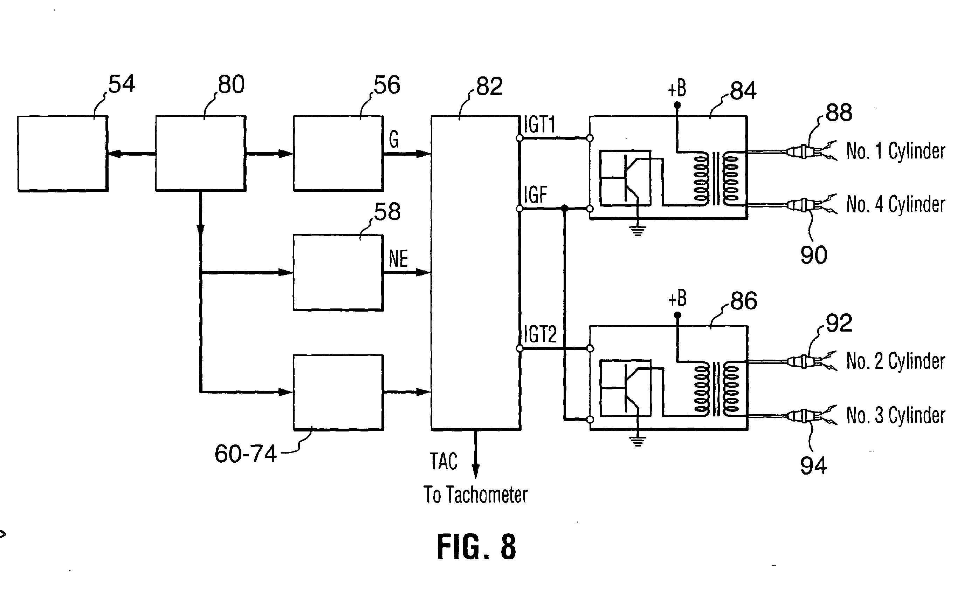

As is illustrated in Figure 8, disposed between engine 54 and sensors 56 through 74 is a switch 80. The sensors 56 through 74 are in electrical communication with an ECM motherboard 82 which is responsible for numerous functions, the most important of which for purposes of this discussion is communication between the sensors and ignition coils 84 and 86. As is known, coils 84 and 86 each communicate with cylinders 88, 90, 92, and 94, respectively.

By providing power interruption via switch 80 to the sensors 56 through 74, it is inconsequential as to whether the ECM motherboard 82 is equipped with anti-theft provisions such as an immobilizer (not shown). This is a significant advantage since the sensors are effected by the switch 80 as opposed to the ECM motherboard 82. By effecting the sensors 56 through 74, the ECM motherboard 82 is also effected. This is a more effective system since it does not matter whether the ECM motherboard includes anti-theft provisions.

The sensors, and particularly those shown in Figure 8, i.e. sensors 56 and 58 are typically at least partially mounted within the engine block 54 as is generally depicted in Figure 9. By connecting the switch 80 to all or some of the sensors 56 through 74, the switch is therefore at least partially mounted in the engine block 54 and therefore presents significant difficulty for potential thieves to tamper with the arrangement. This is in marked contrast to the disposition of the ECM motherboard 82 which is easily accessible.

In this manner, the sensors 52 through 70 and the switch 80 (of which there may be several) can be integrated as a single unit. This arrangement is shown in Figure 10 where the switch 80 and sensor 56 are unified as a single unit. Figure 10 also shows in dashed line the possibility of augmenting security by linking various switches and sensors in tandem.

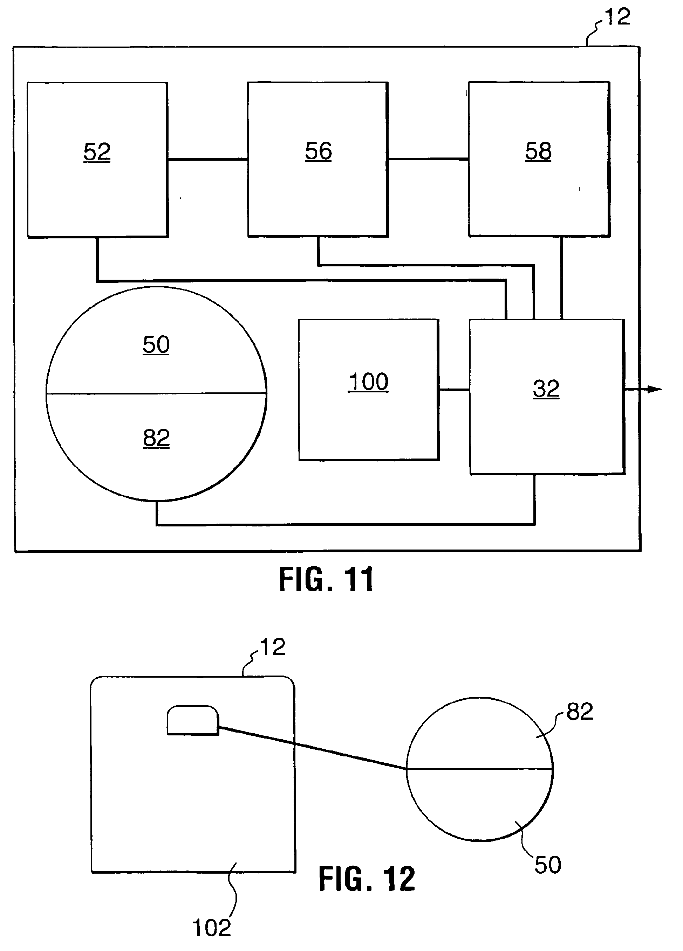

Referring now to Figure 11, shown is a generic illustration which is applicable to either stator magneto arrangements or conventional internal combustion engines. Once again, it is illustrated the switch 32 is positioned within the housing 12 and that any one of the essential elements for engine operation such as the trigger coil 52 camshaft position sensor 56, crankshaft sensor 58, CDI module 50, ECM motherboard 82 and/or fuel/air supply 100 may be connected to the switch internally of housing 12 in order to provide the highest degree of security and therefore the lowest incidents of theft.

Figure 12 illustrates a further variation of the arrangement when a transponder 102 is positioned within housing 12 and communicates with ECM motherboard 82 and CDI module 50.

## Claims

1. A method for preventing unauthorized access to a vehicle having a motor (10), a power source for said motor, a magneto and a stator housed within a housing (12) and an ignition generator coil (20) connected in electrical communication with said magneto, comprising the steps of:
- providing an ignition generator coil interrupt circuit electrically connected to said ignition generator coil (20), said circuit for selectively interrupting electrical communication to said ignition generator coil (20);
- providing switch means (32) connected to said circuit for allowing electrical communication interruption to said ignition generator coil (20); and
- activating said switch means (32) to interrupt electrical communication to said ignition generator coil (20) and disabling engine starting,
**characterized by** the step of:
- mounting said ignition generator coil interrupt circuit directly within said housing (12).

2. The method as set forth in claim 1, wherein said ignition generator coil interrupt circuit is mounted between said stator and said magneto.

3. The method as set forth in claim 1, wherein said ignition generator coil interrupt circuit is mounted adjacent said ignition generator coil (20).

4. The method as set forth in claim 1, including the step of providing an opening in said housing (12) for providing access for said switch means (32) to said ignition generator coil interrupt circuit.

5. An arrangement for preventing unauthorized access to a vehicle, comprising:
- a vehicle, said vehicle having a power source, a magneto and a stator housed within a housing (12) and an ignition generator coil (20) in electrical communication with said magneto;
- an ignition generator coil interrupt circuit electrically connected to said ignition generator coil (20), said circuit for selectively interrupting electrical communication to said ignition generator coil (20); and
- switch means (32) connected to said circuit for allowing electrical communication interruption to said ignition generator coil (20) for disabling said motor (10) ;
**characterized in that**
- said ignition generator coil interrupt circuit and said switch are positioned directly within said housing (12).

6. The combination as set forth in claim 5, wherein said ignition generator coil interrupt circuit is positioned within said housing (12) between said stator and said magneto.

7. The combination as set forth in claim 5, wherein said circuit is positioned adjacent said ignition generator coil (20).

8. The combination as set forth in claim 5, wherein said circuit is positioned between said ignition generator coil (20) and circuitry for starting said motor (10).

9. The combination as set forth in claim 5, wherein said stator includes a stator plate.

10. The combination as set forth in claim 9, wherein said circuit is mounted on said stator plate.

11. The combination as set forth in claim 5, wherein said switch means (32) comprises remote control switch means.

12. The combination as set forth in claim 11, wherein said remote control switch means includes a transmitter and a receiver, said receiver being mounted to said circuit.

13. The combination as set forth in claim 11, wherein said remote control switch means includes a transceiver being mounted to said circuit.

14. The combination as set forth in claim 5, wherein said switch means (32) includes a transponder and a circuit to communicate with said transponder.

15. The combination as set forth in claim 5, wherein said switch means (32) comprises an electrical/mechanical keylock switch mounted to said housing (12) in electrical communication with said circuit.

16. The combination as set forth in claim 5, wherein said vehicle is selected from the group consisting of an all terrain vehicle, a motorcycle, a snowmobile and a watercraft.

17. A method for preventing unauthorized access to a vehicle having an engine (10) according to claim 1, comprising the steps of:
- providing at least one of an ignition generator coil (20) or a trigger coil (52), a condenser discharging ignition (CDI) module in electrical communication with said at least one ignition generator coil (20) or said trigger coil (52); and
- providing a switch means (32) connected to said circuit for interrupting electrical connection between at least one of said trigger coil (52) and said condenser discharging ignition (CDI) module or said ignition generator coil (20) and said condenser discharging ignition (CDI) module;
**characterized by** the steps of:
- said ignition generator coil (20) being positioned within said housing (12); and
- directly mounting said switch means (32) within said housing (12) whereby said switch means (32) is isolated within said housing (12) and accessible with specialized tools and skills.

18. The method as set forth in claim 17, wherein said switch means (32) is connected for interrupting electrical communication between said ignition generator coil (20) and said condenser discharging ignition (CDI) module.

19. The method as set forth in claim 17, wherein said switch means (32) is connected for interrupting electrical communication between said trigger coil (52) and said condenser discharging ignition (CDI) module.

20. The method as set forth in claim 17, further including the step of mounting said condenser discharging ignition (CDI) module in said housing (12).

21. The method as set forth in claim 17, wherein said electrical communication between said switch means (32) and auxiliary ignition coils is interrupted with said condenser discharging ignition (CDI) module.

22. A method for preventing unauthorized access to a vehicle having an engine and block therefor, sensors for effecting engine activation, a power source and at least one ignition coil, and means for establishing electrical communication between said sensors and said coil according to claim 1, said method comprising the steps of:
- providing switch means for interrupting communication to or from said sensors;
- positioning said switch means between at least one sensor of said sensors and said means for establishing communication between said sensors and said coils;
- connecting said switch means to said at least one sensor; and
- activating said switch means to interrupt communication to or from said at least one sensor;
- wherein said sensors are mounted at least partially in said block of said engine.

23. The method as set forth in claim 22, wherein said sensors are selected from the group consisting of camshaft position sensor, crankshaft position sensor, condenser discharging ignition (CDI) module, ECM, fuel air supply, ignition coil, trigger coil, transponder or ignition generator coil.

## Patentansprüche

1. Verfahren zum Verhindern eines unerlaubten Zugriffs auf ein Fahrzeug mit einem Motor (10), einer Stromquelle für den Motor, einem Zündmagneten und einem Stator, der innerhalb eines Gehäuses (12) angeordnet ist, und einer Zündgeneratorspule (20), die in elektrischer Verbindung mit dem Zündmagneten verbunden ist, umfassend die Schritte:
- Vorsehen einer Zündgeneratorspulen-Unterbrechungsschaltung, die elektrisch mit der Zündgeneratorspule (20) verbunden ist, wobei die Schaltung zum wahlweisen Unterbrechen der elektrischen Verbindung zur Zündgeneratorspule (20) dient;
- Vorsehen einer Umschalteinrichtung (32), die mit der Schaltung verbunden ist, um eine Unterbrechung der elektrischen Verbindung zur Zündgeneratorspule (20) zu ermöglichen; und
- Aktivieren der Umschalteinrichtung (32) zum Unterbrechen der elektrischen Verbindung zur Zündgeneratorspule (20) und Deaktivieren des Startens des Verbrennungsmotors,
**gekennzeichnet durch** den Schritt:
- Einbauen der Zündgeneratorspulen-Unterbrechungsschaltung direkt innerhalb des Gehäuses (12).

2. Verfahren nach Anspruch 1, wobei die Zündgeneratorspulen-Unterbrechungsschaltung zwischen dem Stator und dem Zündmagneten eingebaut ist.

3. Verfahren nach Anspruch 1, wobei die Zündgeneratorspulen-Unterbrechungsschaltung angrenzend an die Zündgeneratorspule (20) eingebaut ist.

4. Verfahren nach Anspruch 1, umfassend den Schritt: Vorsehen einer Öffnung in dem Gehäuse (12), um der Umschalteinrichtung (32) Zugriff auf die Zündgeneratorspulen-Unterbrechungsschaltung zu gewähren.

5. Anordnung zum Verhindern eines unerlaubten Zugriffs auf ein Fahrzeug, umfassend:
- ein Fahrzeug, wobei das Fahrzeug eine Stromquelle, einen Zündmagneten und einen innerhalb eines Gehäuses (12) angeordneten Stator und eine Zündgeneratorspule (20) in elektrischer Verbindung mit dem Zündmagneten aufweist;
- eine Zündgeneratorspulen-Unterbrechungsschaltung, die mit der Zündgeneratorspule (20) verbunden ist, wobei die Schaltung zum wahlweisen Unterbrechen der elektrischen Verbindung zur Zündgeneratorspule (20) dient; und
- eine Umschalteinrichtung (32), die mit der Schaltung verbunden ist, um eine Unterbrechung der elektrischen Verbindung zur Zündgeneratorspule (20) zu ermöglichen, um einen Motor (10) zu deaktivieren;
**dadurch gekennzeichnet, dass**
- die Zündgeneratorspulen-Unterbrechungsschaltung und die Umschalteinrichtung direkt innerhalb des Gehäuses (12) angeordnet sind.

6. Kombination nach Anspruch 5, wobei die Zündgeneratorspulen-Unterbrechungsschaltung innerhalb des Gehäuses (12) zwischen dem Stator und dem Zündmagneten angeordnet ist.

7. Kombination nach Anspruch 5, wobei die Schaltung angrenzend an die Zündgeneratorspule (20) angeordnet ist.

8. Kombination nach Anspruch 5, wobei die Schaltung zwischen der Zündgeneratorspule (20) und einem Schaltkreis zum Starten des Elektromotors (10) angeordnet ist.

9. Kombination nach Anspruch 5, wobei der Stator eine Statorplatte umfasst.

10. Kombination nach Anspruch 9, wobei die Schaltung auf der Statorplatte befestigt ist.

11. Kombination nach Anspruch 5, wobei die Umschalteinrichtung (32) eine Fernsteuer-Umschalteinrichtung umfasst.

12. Kombination nach Anspruch 11, wobei die Fernsteuer-Umschalteinrichtung einen Sender und einen Empfänger umfasst, wobei der Empfänger an der Schaltung befestigt ist.

13. Kombination nach Anspruch 11, wobei die Fernsteuer-Umschalteinrichtung einen Transceiver umfasst, der an der Schaltung befestigt ist.

14. Kombination nach Anspruch 5, wobei die Umschalteinrichtung (32) einen Transponder und einen Schaltkreis zum Kommunizieren mit dem Transponder umfasst.

15. Kombination nach Anspruch 5, wobei die Umschalteinrichtung (32) einen elektro-mechanischen Schlossschalter umfasst, der an dem Gehäuse (12) in elektrischer Verbindung mit der Schaltung befestigt ist.

16. Kombination nach Anspruch 5, wobei das Fahrzeug aus der Gruppe bestehend aus einem Geländefahrzeug, einem Motorrad, einem Schneemobil und einem Wasserfahrzeug ausgewählt wird.

17. Verfahren zum Verhindern eines unerlaubten Zugriffs auf ein Fahrzeug mit einem Verbrennungsmotor (10) nach Anspruch 1, umfassend die Schritte:
- Vorsehen zumindest einer Zündgeneratorspule (20) und/oder einer Auslösespule (52), eines Zündmoduls mit Unterbrecher und Kondensator (CDI-Modul) in elektrischer Verbindung mit zumindest der Zündgeneratorspule (20) und/oder der Auslösespule (52); und
- Vorsehen einer Umschalteinrichtung (32), die mit der Schaltung zum Unterbrechen der elektrischen Verbindung zwischen zumindest der Auslösespule (52) und dem Zündmodul mit Unterbrecher und Kondensator (CDI-Modul) und/oder der Zündgeneratorspule (20) und dem Zündmodul mit Unterbrecher und Kondensator (CDI-Modul) verbunden ist;
**gekennzeichnet durch** die Schritte
- Anordnen der Zündgeneratorspule (20) innerhalb des Gehäuses (12); und
- direktes Befestigen der Umschalteinrichtung (32) innerhalb des Gehäuses (12), wobei die Umschalteinrichtung (32) innerhalb des Gehäuses (12) isoliert ist und mit Spezialwerkzeugen und -kompetenzen zugänglich ist.

18. Verfahren nach Anspruch 17, wobei die Umschalteinrichtung (32) zum Unterbrechen der elektrischen Verbindung zwischen der Zündgeneratorspule (20) und dem Zündmodul mit Unterbrecher und Kondensator (CDI-Modul) verbunden ist.

19. Verfahren nach Anspruch 17, wobei die Umschalteinrichtung (32) zum Unterbrechen der elektrischen Verbindung zwischen der Auslösespule (52) und dem Zündmodul mit Unterbrecher und Kondensator (CDI-Modul) verbunden ist.

20. Verfahren nach Anspruch 17, ferner umfassend den Schritt: Befestigen des Zündmoduls mit Unterbrecher und Kondensator (CDI-Modul) in dem Gehäuse (12).

21. Verfahren nach Anspruch 17, wobei die elektrische Verbindung zwischen der Umschalteinrichtung (32) und Hilfs-Zündspulen mit dem Zündmodul mit Unterbrecher und Kondensator (CDI-Modul) unterbrochen wird.

22. Verfahren zum Verhindern eines unerlaubten Zugriffs auf ein Fahrzeug mit einem Verbrennungsmotor und einem Block hierfür, Sensoren zum Bewirken einer Aktivierung des Verbrennungsmotors, einer Stromquelle und zumindest einer Zündspule, und einer Einrichtung zum Aufbauen einer elektrischen Verbindung zwischen den Sensoren und der Spule gemäß Anspruch 1, wobei das Verfahren die Schritte umfasst:
- Vorsehen einer Umschalteinrichtung zum Unterbrechen der Verbindung zu oder von den Sensoren;
- Anordnen der Umschalteinrichtung zwischen zumindest einem Sensor der Sensoren und der Einrichtung zum Aufbauen einer Verbindung zwischen den Sensoren und den Spulen;
- Verbinden der Umschalteinrichtung mit dem zumindest einen Sensor; und
- Aktivieren der Umschalteinrichtung, um die Verbindung zu oder von dem zumindest einen Sensor zu unterbrechen;
- wobei die Sensoren zumindest teilweise in dem Block des Verbrennungsmotors befestigt sind.

23. Verfahren nach Anspruch 22, wobei die Sensoren aus der Gruppe bestehend aus Nockenwellen-Positionssensor, Kurbelwellen-Positionssensor, Zündmodul mit Unterbrecher und Kondensator (CDI-Modul), ECM, Kraftstoff-Luft-Zufuhr, Zündspule, Auslösespule, Transponder oder Zündgeneratorspule ausgewählt sind

## Revendications

1. Procédé empêchant l'accès non autorisé à un véhicule équipé d'un moteur (10), d'une source d'alimentation pour ledit moteur, d'une magnéto, d'un stator logé dans un boîtier (12) et d'une bobine de générateur d'allumage (20) connectée de façon électrique audit magnéto, comprenant les étapes de :
- mise à disposition d'un circuit d'interruption de bobine de générateur d'allumage connecté électriquement à ladite bobine de générateur d'allumage (20), ledit circuit permettant d'interrompre sélectivement la communication électrique avec ladite bobine de générateur d'allumage (20) ;
- mise à disposition de moyens de commutation (32) connectés audit circuit permettant d'interrompre la communication électrique avec ladite bobine de générateur d'allumage (20) ; et
- activation desdits moyens de commutation (32) pour interrompre la communication électrique avec ladite bobine de générateur d'allumage (20) et désamorcer le démarrage du moteur,
**caractérisé par** les étapes de :
- montage dudit circuit d'interruption de bobine de générateur d'allumage directement dans ledit boîtier (12).

2. Procédé selon la revendication 1, dans lequel ledit circuit d'interruption de bobine de générateur d'allumage est monté entre ledit stator et ladite magnéto.

3. Procédé selon la revendication 1, dans lequel ledit circuit d'interruption de bobine de générateur d'allumage est monté à côté de ladite bobine de générateur d'allumage (20).

4. Procédé selon la revendication 1, comprenant l'étape de mise à disposition d'une ouverture dans ledit boîtier (12) pour permettre d'accéder auxdits moyens de commutation (32) vers ledit circuit d'interruption de bobine de générateur d'allumage.

5. Disposition empêchant l'accès non autorisé à un véhicule, comprenant :
- un véhicule, ledit véhicule étant équipé d'une source d'alimentation, d'une magnéto, d'un stator logé dans un boîtier (12) et d'une bobine de générateur d'allumage (20) en communication électrique avec ledit magnéto ;
- un circuit d'interruption de bobine de générateur d'allumage connecté électriquement à ladite bobine de générateur d'allumage (20), ledit circuit permettant d'interrompre sélectivement la communication électrique avec ladite bobine de générateur d'allumage (20) ; et
- des moyens de commutation (32) connectés audit circuit permettant d'interrompre la communication électrique avec ladite bobine de générateur d'allumage (20) pour désactiver ledit moteur (10) ;
**caractérisée en ce que**
- ledit circuit d'interruption de bobine de générateur d'allumage et ledit commutateur sont directement positionnés dans ledit boîtier (12).

6. Combinaison telle qu'exposée dans la revendication 5, dans laquelle ledit circuit d'interruption de bobine de générateur d'allumage est positionné dans ledit boîtier (12) entre ledit stator et ladite magnéto.

7. Combinaison telle qu'exposée dans la revendication 5, dans laquelle ledit circuit est positionné à côté de ladite bobine de générateur d'allumage (20).

8. Combinaison telle qu'exposée dans la revendication 5, dans laquelle ledit circuit est positionné entre ladite bobine de générateur d'allumage (20) et l'ensemble de circuits permettant de démarrer ledit moteur (10).

9. Combinaison telle qu'exposée dans la revendication 5, dans laquelle ledit stator comprend une plaque de déclenchement.

10. Combinaison telle qu'exposée dans la revendication 9, dans laquelle ledit circuit est monté sur ladite plaque de déclenchement.

11. Combinaison telle qu'exposée dans la revendication 5, dans laquelle lesdits moyens de commutation (32) comprennent des moyens de commutation télécommandés.

12. Combinaison telle qu'exposée dans la revendication 11, dans laquelle lesdits moyens de commutation télécommandés comprennent un émetteur et un récepteur, ledit récepteur étant monté sur ledit circuit.

13. Combinaison telle qu'exposée dans la revendication 11, dans laquelle lesdits moyens de commutation télécommandés comprennent un émetteur-récepteur monté sur ledit circuit.

14. Combinaison telle qu'exposée dans la revendication 5, dans laquelle lesdits moyens de commutation (32) comprennent un transpondeur et un circuit pour communiquer avec ledit transpondeur.

15. Combinaison telle qu'exposée dans la revendication 5, dans laquelle lesdits moyens de commutation (32) comprennent un commutateur de verrouillage électrique/mécanique monté sur ledit boîtier (12) en communication électrique avec ledit circuit.

16. Combinaison telle qu'exposée dans la revendication 5, dans laquelle ledit véhicule est sélectionné dans le groupe comprenant les véhicules tous terrains, les motocycles, les motoneiges et les véhicules aquatiques motorisés.

17. Procédé empêchant l'accès non autorisé à un véhicule équipé d'un moteur (10) selon la revendication 1 ; comprenant les étapes de :
- mise à disposition d'au moins une bobine de générateur d'allumage (20) ou d'une bobine de déclenchement (52), d'un module d'allumage de décharge de condensateur (CDI) en communication électrique avec ladite au moins une bobine de générateur d'allumage (20) ou avec ladite bobine de déclenchement (52) ; et
- mise à disposition de moyens de commutation (32) connectés audit circuit permettant d'interrompre la connexion électrique entre au moins ladite bobine de déclenchement (52) et ledit module d'allumage de décharge de condensateur (CDI) ou ladite bobine de générateur d'allumage (20) et ledit module d'allumage de décharge de condensateur (CDI) ;
**caractérisé par** les étapes de :
- positionnement de ladite bobine de générateur d'allumage (20) dans ledit boîtier (12) ; et
- montage direct desdits moyens de commutation (32) dans ledit boîtier (12), lesdits moyens de commutation (32) étant isolés dans ledit boîtier (12) et accessibles avec les compétences et les outils spécialisés nécessaires.

18. Procédé selon la revendication 17, dans lequel lesdits moyens de commutation (32) sont connectés pour interrompre la communication électrique entre ladite bobine de générateur d'allumage (20) et ledit module d'allumage de décharge de condensateur (CDI).

19. Procédé selon la revendication 17, dans lequel lesdits moyens de commutation (32) sont connectés pour interrompre la communication électrique entre ladite bobine de déclenchement (52) et ledit module d'allumage de décharge de condensateur (CDI).

20. Procédé selon la revendication 17, comprenant en outre l'étape de montage dudit module d'allumage de décharge de condensateur (CDI) dans ledit boîtier (12).

21. Procédé selon la revendication 17, dans lequel ladite communication électrique entre lesdits moyens de commutation (32) et les bobines d'allumage auxiliaires est interrompue du fait dudit module d'allumage de décharge de condensateur (CDI).

22. Procédé empêchant l'accès non autorisé à un véhicule équipé d'un moteur et de son bloc-moteur, de capteurs pour activer le moteur, d'une source d'alimentation, d'au moins une bobine d'allumage et de moyens permettant d'établir la communication électrique entre lesdits capteurs et ladite bobine selon la revendication 1, ledit procédé comprenant les étapes de :
- mise à disposition de moyens de commutation permettant d'interrompre la communication en provenance ou à destination desdits capteurs ;
- positionnement desdits moyens de commutation entre au moins un capteur parmi lesdits capteurs et lesdits moyens permettant d'établir la communication entre lesdits capteurs et lesdites bobines ;
- connexion desdits moyens de commutation audit au moins un capteur ; et
- activation desdits moyens de commutation pour interrompre la communication en provenance ou à destination dudit au moins un capteur ;
- dans lequel lesdits capteurs sont montés au moins partiellement dans ledit bloc dudit moteur.

23. Procédé selon la revendication 22, dans lequel lesdits capteurs sont sélectionnés dans le groupe comprenant le capteur de position d'arbre à cames, le capteur de position de vilebrequin, le module d'allumage de décharge de condensateur (CDI), le module de commande du moteur, l'alimentation en air et en carburant, la bobine d'allumage, la bobine de déclenchement, le transpondeur ou la bobine de générateur d'allumage.
